# EUROPÄISCHE PATENTSCHRIFT

(11) **EP 0 867 461 B1**
(45) Veröffentlichungstag und Bekanntmachung des Hinweises auf die Patenterteilung: **05.07.2000**
(21) Anmeldenummer: 98104646.9
(22) Anmeldetag: 14.03.1998
(51) Int. Cl.: C08G 77/50, C08J 9/00

(54) **Neuartige Siloxanblockcopolymere mit starren Spacern und deren Verwendung**
Novel siloxane block copolymers having rigid spacers and their use
Nouveaux copolymères séquencés de siloxane comprenant des éléments intercalaires rigides et leur utilisation

(30) Priorität: 29.03.1997 DE 19713279
(43) Veröffentlichungstag der Anmeldung: 30.09.1998
(73) Patentinhaber: Goldschmidt AG, 45127 Essen (DE)
(72) Erfinder: Burkhart, Georg, Dr., 45239 Essen (DE); Langenhagen, Rolf-Dieter, 45529 Hattingen (DE); Weier, Andreas, Dr., 45289 Essen (DE)

(56) Entgegenhaltungen:
- EP-A- 0 282 927
- FR-A- 2 595 364
- US-A- 4 853 474

## Beschreibung

Die Erfindung betrifft Blockcopolymere mit über starre Spacer verknüpften Siloxanblöcken und ihre Verwendung als oberflächenaktive Agentien.

Nach dem Stand der Technik gibt es eine Vielzahl von oberflächenaktiven Siloxanblockcopolymeren, die in einer breiten Palette von technischen Anwendungen benutzt werden. Dabei kann es sich sowohl um Methylpolysiloxane (siehe DE-C-25 33 074) wie um (pseudo)halogenalkylsubstituierte Siloxane (siehe DE-C-36 26 297, US-A-3 952 038 oder DE-A-24 02 690) handeln, die z. B. Verwendung als Zellregulatoren in hochelastischen, kalthärtenden Polyurethanschäumen finden. Auch eine breite Palette von Siliconpolyether-Copolymeren und ihr Einsatz als oberflächenaktive Substanzen ist bekannt, wie z. B. in den folgenden Patentschriften exemplarisch beschrieben wird:

DE-C-15 70 647: Chlorpolysiloxanylsulfate werden mit Gemischen von Alkylenoxid-Addukten umgesetzt, welche aus
- 50 bis 96 OH-Äquivalentprozent: Polyalkylenglykolmonoethern, die aus Ethylenoxid- und Propylenoxideinheiten bestehen und einen Gehalt von 40 bis 70 Gew.-% Oxypropyleneinheiten und ein Molgewicht von 1000 bis 3000 aufweisen, deren Hydroxylgruppen vorzugsweise sekundär sind, und
- 5 bis 50 OH-Äquivalentprozent: Alkylenoxid-Addukten mehrwertiger Hydroxylverbindungen eines Molgewichtes von 130 bis 3500, deren Polyalkylenglykolkomponente aus Ethylenoxid- und/oder Propylenoxideinheiten bestehen und die ein OH-Äquivalentgewicht bis zu 1750 haben und deren Hydroxylgruppen vorzugsweise sekundär sind, bestehen und
wobei die Mengenverhältnisse so gewählt sind, daß auf ein Säureäquivalent des Chlorpolysiloxanylsulfates höchstens 1,4, vorzugsweise 1,05 bis 1,2 OH-Äquivalente kommen.

DE-C-16 94 366: Es werden als Schaumstabilisatoren solche Polysiloxan-Polyoxyalkylen-Blockmischpolymerisate verwendet, deren Polysiloxanblock in an sich bekannter Weise aufgebaut ist, deren Polyoxyalkylenblock jedoch aus
- 25 bis 70 Gew.-%: eines Polyoxyalkylens mit einem durchschnittlichen Molekulargewicht von 1600 bis 4000 und einem Ethylenoxidgehalt von 20 bis 100 Gew.-%, Rest Propylenoxid und gegebenenfalls höhere Alkylenoxide, und
- 30 bis 75 Gew.-%: eines Polyoxyalkylens mit einem durchschnittlichen Molekulargewicht von 400 bis 1200 und einem Ethylenoxidgehalt von 65 bis 100 Gew.-%, Rest Propylenoxid und gegebenenfalls höhere Alkylenoxide, besteht.

DE-A-25 41 865: Die Polysiloxan-Polyoxyalkylen-Blockmischpolymerisate sind bezüglich ihrer Polyoxyalkylenblöcke so definiert, daß der eine Polyoxyalkylenblock ein mittleres Molgewicht von 900 bis 1300 hat und zu 30 bis 55 Gew.-% aus Ethylenoxid, Rest Propylenoxid, und der andere Polyoxyalkylenblock ein mittleres Molgewicht von 3800 bis 5000 hat und zu 30 bis 50 Gew.-% aus Ethylenoxid, Rest Propylenoxid, besteht.

EP-A-0 275 563: Das in dieser Patentanmeldung beschriebene Blockmischpolymerisat umfaßt drei verschiedene Polyoxyalkylenblöcke, nämlich einen Block, welcher 20 bis 60 Gew.-% Oxyethyleneinheiten enthält, bei einem Molgewicht von 3000 bis 5000, einen weiteren Block mit 20 bis 60 Gew.-% Oxyethyleneinheiten und einem Molgewicht von 800 bis 2900 und einen dritten Block nur aus Polyoxypropyleneinheiten und einem Molgewicht von 130 bis 1200.

Weiter werden in der Patentliteratur Siloxanblockcopolymere, die als Emulgatoren Einsatz finden, beschrieben, bei denen an lineare Polysiloxane sowohl Polyoxyalkylengruppen als auch langkettige Alkylgruppen gebunden sind (siehe z. B. US-A-3 234 252, US-A-4 047 958 oder DE-C-34 36 177).

Weitere Schutzrechte (z. B. US-A-5 136 068, EP-A-0 381 318 und EP-A-0 529 847) beschreiben oberflächenaktive Siloxanblockcopolymere für den Einsatz als Emulgatoren, bei denen Polyoxyalkylenreste und langkettige Alkylreste am Polysiloxan gebunden sind und eine zusätzliche Verknüpfung des Siloxanblockcopolymeren über einen zweiwertigen organischen Rest vorliegt. Das Merkmal der beschriebenen Siloxanblockcopolymeren ist, daß die Verknüpfung in allen Fällen durch Reaktion von SiH-Gruppen mit z. B. Diolefinen, Divinylbenzol oder 1,3-Divinyltetramethyldisiloxan erhalten wird. Dabei bilden sich bewegliche Verbrükkungsglieder (Spacer).

Trotz der so erhältlichen Vielzahl unterschiedlicher Wirksubstanzen bedingt die Komplexität der Einsatzgebiete (inhomogene, teilweise mehrphasige Rohstoffkombinationen vielschichtiger Zusammensetzung in rational nicht vollständig erfaßten Anwendungen, wie Kosmetik, Emulsionstechnik, Mehrphasenpolymerisation etc.) die Notwendigkeit, nach weiter verbesserten Strukturen zu suchen. Beispielhaft für derartigen Optimierungsbedarf für Additive mit oberflächenaktiven Eigenschaften ist die Produktion von Polyurethanschäumen. Dieser Optimierungsbedarf resultiert zum einen aus der Vielzahl der möglichen Polyurethanschaumtypen, z. B. Weichschaum, Hartschaum, Esterschaum, Kaltschaum, Verpackungsschaum, flammlaminierbarer Schaum, Formschaum, Integralschaum etc., zum anderen auch aus neueren Verschäumungstechniken, wie Variable Pressure Foaming, Verschäumungen mit unter Druck stehenden inerten Gasen oder auch 'Forced Cooling Processes' (z. B. ENVIRO-CURE, Fa. CRAIN INDUSTRIES).

Überraschenderweise wurde nun gefunden, daß die Einführung starrer Abstandhalter zwischen räumlich getrennten Siloxanblöcken in einem Molekül erstaunliche Effekte in verschiedenen anwendungstechnischen Ausprüfungen bewirkt.

Die vorliegende Erfindung betrifft neuartige Strukturen, die dadurch gekennzeichnet sind, daß innerhalb eines Moleküls Siloxanblöcke über einen starren Abstandhalter verbunden sind. Der damit eingestellte Abstand zwischen den Siloxanbausteinen ist also nicht wie in simplen linearen oder nicht polycyclischen Strukturen durch eine freie Beweglichkeit ("Biegsamkeit") der Verbindung variabel. Zum Aufbau der erfindungsgemäßen Strukturen hat sich die Verwendung des 2,5-Norbornadiens (Bicyclo [2.2.1]hepta-2,5-dien) als besonders geeignet erwiesen. Demzufolge sind die beanspruchten Strukturen durch eine Siloxanblockverknüpfung über 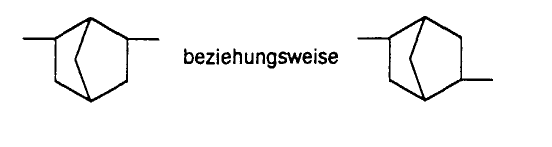 charakterisiert, was im folgenden durch die Schreibweise 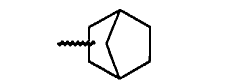 ausgedrückt wird.

Gegenstand der Erfindung sind somit Blockcopolymere der allgemeinen durchschnittlichen Formel: 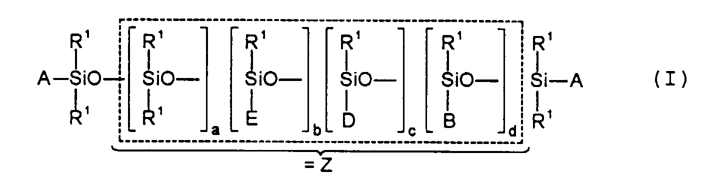 welche insgesamt bis zu 600 Si-Atome enthalten, wobei die Reste und Indices folgende Bedeutung haben:
- A =: Rest R¹, Rest E oder ein Rest der Formel IIa 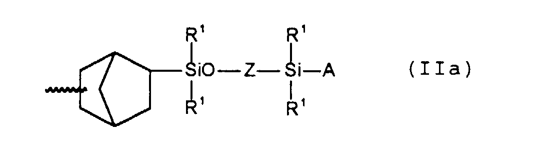 oder ein Rest der Formel IIb 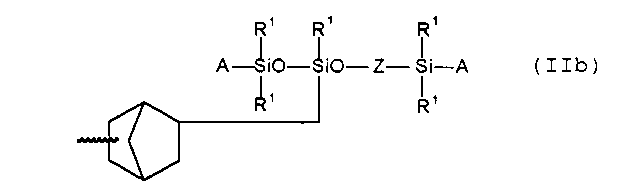
- B =: Rest der Formel IIa oder IIb
- D =: Rest der Formel 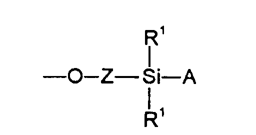
- R¹ =: ein Alkylrest mit 1 bis 30 Kohlenstoffatomen, ein substituierter Alkylrest, ein gegebenenfalls substituierter Arylrest oder ein gegebenenfalls substituierter Alkarylrest, wobei jedoch mindestens 80 % der Reste R¹ Methylgruppen sind,
- a: hat einen Wert von 3 bis 200,
- b: hat einen Wert von 0 bis 50,
- c: hat einen Wert von 0 bis 10 und
- d: hat einen Wert von 0 bis 5,
wobei im Fall b, c und d = 0 der Rest A nur der Rest IIb sein kann und
wobei die Werte für a, b, c und d in den einzelnen Segmenten Z der Reste A, B und D unterschiedlich sein können,
- E =: Rest, der
a) ein Rest der allgemeinen Formel

   -R²_{f}-O-(CₘH₂ₘO-)ₙR³

   ist, wobei
   R² ein zweiwertiger Alkylrest, der auch verzweigt sein kann, ist und
   f einen Wert von 0 oder 1,
   m einen Wert von durchschnittlich 2 bis 4,
   n einen Wert von 0 bis 100 hat und
   R³ ein Wasserstoffrest, ein gegebenenfalls substituierter Alkylrest mit 1 bis 6 Kohlenstoffatomen, ein Acylrest oder ein -O-CO-NH-R⁴-Rest ist, bei dem R⁴ ein gegebenenfalls substituierter Alkyl- oder Arylrest ist, und/oder
b) die Bedeutung eines epoxyfunktionalisierten, gegebenenfalls Heteroatome enthaltenden Alkylsubstituenten, und/oder
c) die Bedeutung eines Mono-, Di- und Trihydroxyalkylsubstituenten, der auch aromatisch oder verzweigt und partiell oder vollständig verethert oder verestert sein kann, und/oder
d) die Bedeutung eines halogen- oder pseudohalogensubstituierten Alkyl-, Aryl- oder Aralkylrestes, der gegebenenfalls auch verzweigt sein kann, hat,
mit der Maßgabe, daß mindestens ein Rest der Formel IIa oder IIb im Molekül vorhanden ist.

Dabei können auch verschiedene Substituenten in Kombination eingesetzt werden, wie z. B. für Polyethersubstituenten in der DE-C-42 29 402 beschrieben. Die Substituenten können sich gegebenenfalls unterscheiden, z. B. in ihrer Molmasse, bei Polyethern evtl. in ihrer Endgruppe R³ oder den Anteilen der verwendeten Monomeren, der Art der Monomeren etc.

Das Verbrückungsglied (Spacer) 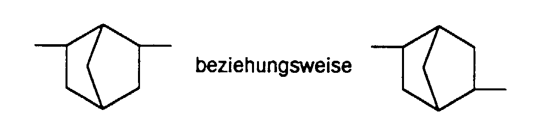 zwischen den Siloxansegmenten wird durch die Reaktion von 2,5-Norbornadien mit SiH-Gruppen gebildet. Pro Molekül der erfindungsgemäßen Substanzen muß mindestens ein Rest 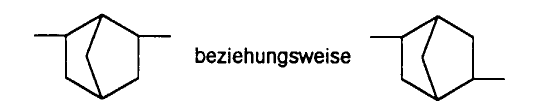 enthalten sein. Das durch Verknüpfung erhaltene Molekül sollte ≤ 600 Si-Atome enthalten.

Dem Fachmann ist klar, daß die erhaltenen Verbindungen in Form eines Gemisches vorliegen, dessen Verteilung im wesentlichen durch statistische Gesetze bestimmt wird. Die Werte für a, b, c, d, n und die Anzahl der Reste 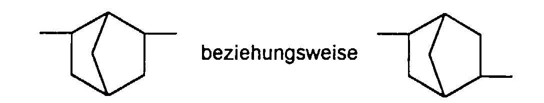 pro Molekül entsprechen daher Mittelwerten.

Ein geringer Anteil der Reste R¹ kann ein Wasserstoffrest sein, nämlich dann, wenn die eingesetzten Wasserstoffsiloxane nicht vollständig mit den eingesetzten, olefinisch ungesättigten Verbindungen (z. B. Allylpolyether, Olefine, Allylglycidylether etc.) und dem 2,5-Norbornadien abreagieren.

In Abhängigkeit von dem gewünschten Einsatzgebiet sind aus der Gruppe der beanspruchten Verbindungen verschiedene Bereiche bevorzugt:

Für Anwendungen bei der Herstellung von Polyurethan-Weichblockschäumen sind z. B. Verbindungen bevorzugt mit b > 3 und 5 < (a+c+d)/b < 20, besonders bevorzugt aber Produkte mit einem durchschnittlichen m im Molekül von 2,3 < m < 3,1 und ganz besonders bevorzugt Produkte mit einem durchschnittlichen m im Molekül von 2,5 < m < 2,8.

Für die Anwendung bei der Herstellung von Polyurethan-Hartschaum oder Polyurethan-Esterschaum sind Verbindungen bevorzugt mit einem durchschnittlichen n im Molekül von n < 28 und besonders bevorzugt Verbindungen mit einem durchschnittlichen m im Molekül von m < 2,5 und ganz besonders bevorzugt Verbindungen mit einem durchschnittlichen Quotienten (a+c+d)/b im Molekül von (a+c+d)/b < 8.

Für Anwendungen bei der Herstellung von Kaltformschäumen sind Verbindungen bevorzugt mit einem durchschnittlichen b im Molekül von b < 5 und besonders bevorzugt Verbindungen mit einer Gesamtzahl der Reste E < 7.

Für Anwendungen in der Kosmetik oder als Emulgator sind Verbindungen bevorzugt, bei denen mindestens 60 % der Reste R³ Wasserstoffreste sind, besonders bevorzugt Verbindungen, bei denen mindestens 80 % der Reste R³ Wasserstoffreste sind und ganz besonders bevorzugt Verbindungen, bei denen alle Reste R³ Wasserstoffreste sind und der durchschnittliche Wert von m im Molekül kleiner als 2,3 ist.

Für Anwendungen als Additiv im Bereich Lacke und Farben sind solche Verbindungen bevorzugt, bei denen mindestens 80 % der Reste R³ Wasserstoffreste sind. Besonders bevorzugt sind solche Verbindungen, bei denen der Rest E die Bedeutung eines epoxyfunktionalisierten Alkylsubstituenten hat.

Im folgenden sind Beispiele für die erfindungsgemäß verknüpften Polysiloxan-Blockcopolymere aufgeführt, wobei zur besseren Übersicht nur jeweils ein Anknüpfungsort dargestellt ist.

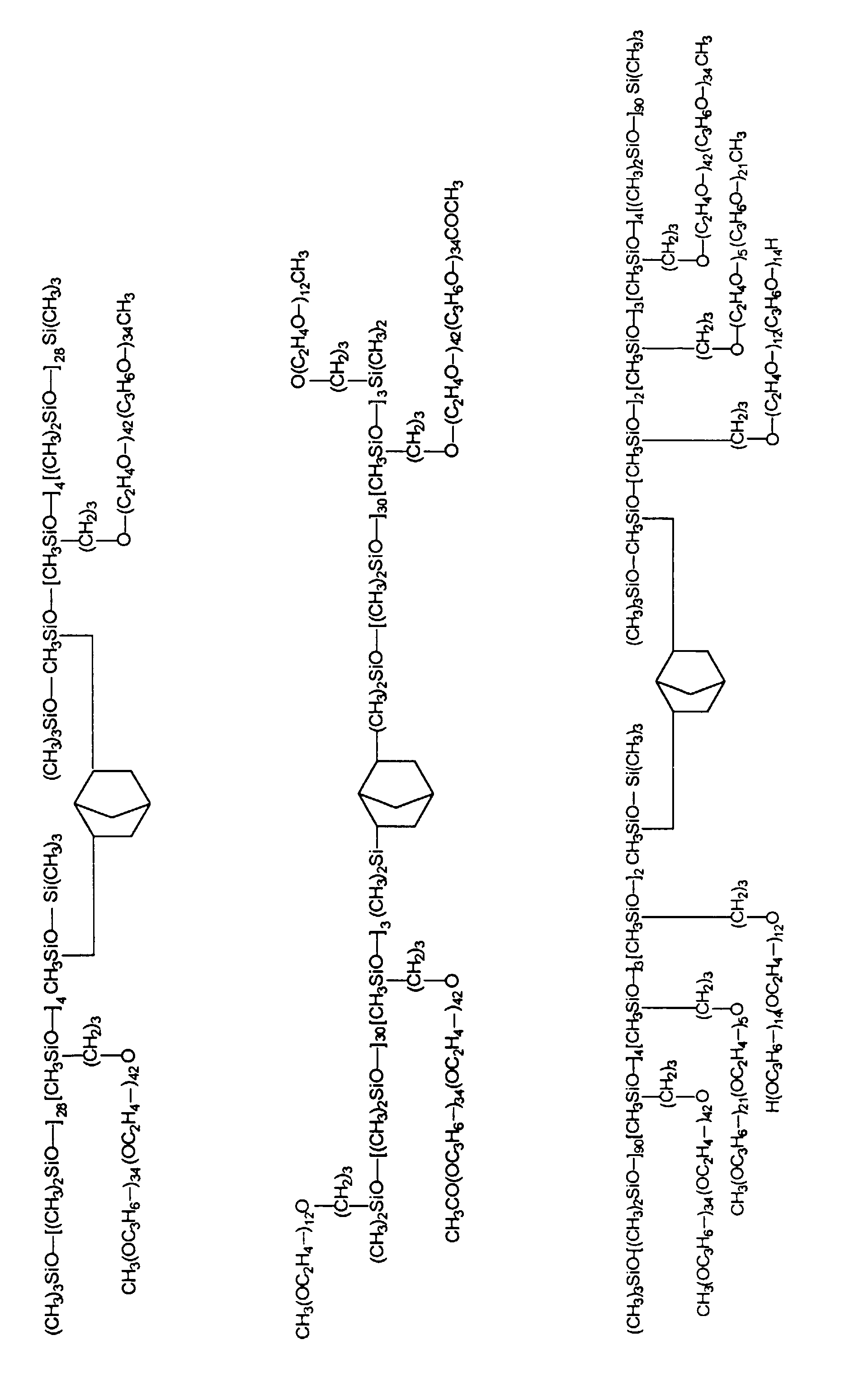

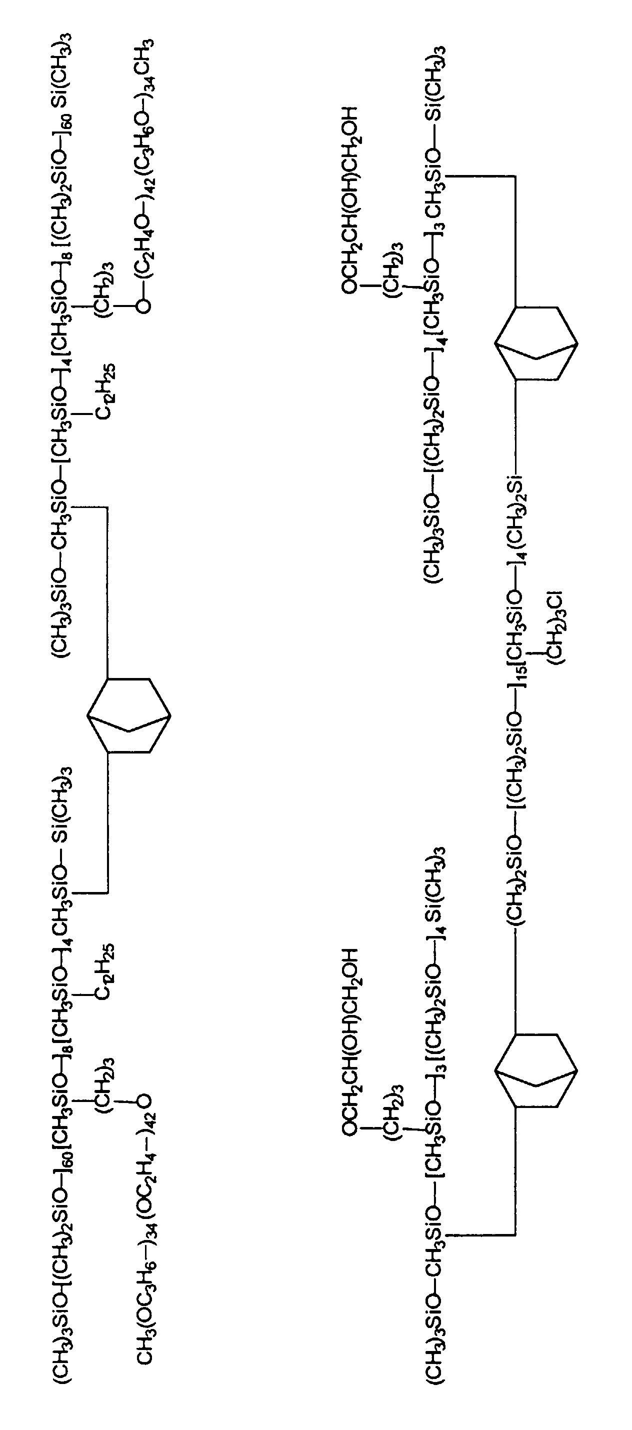

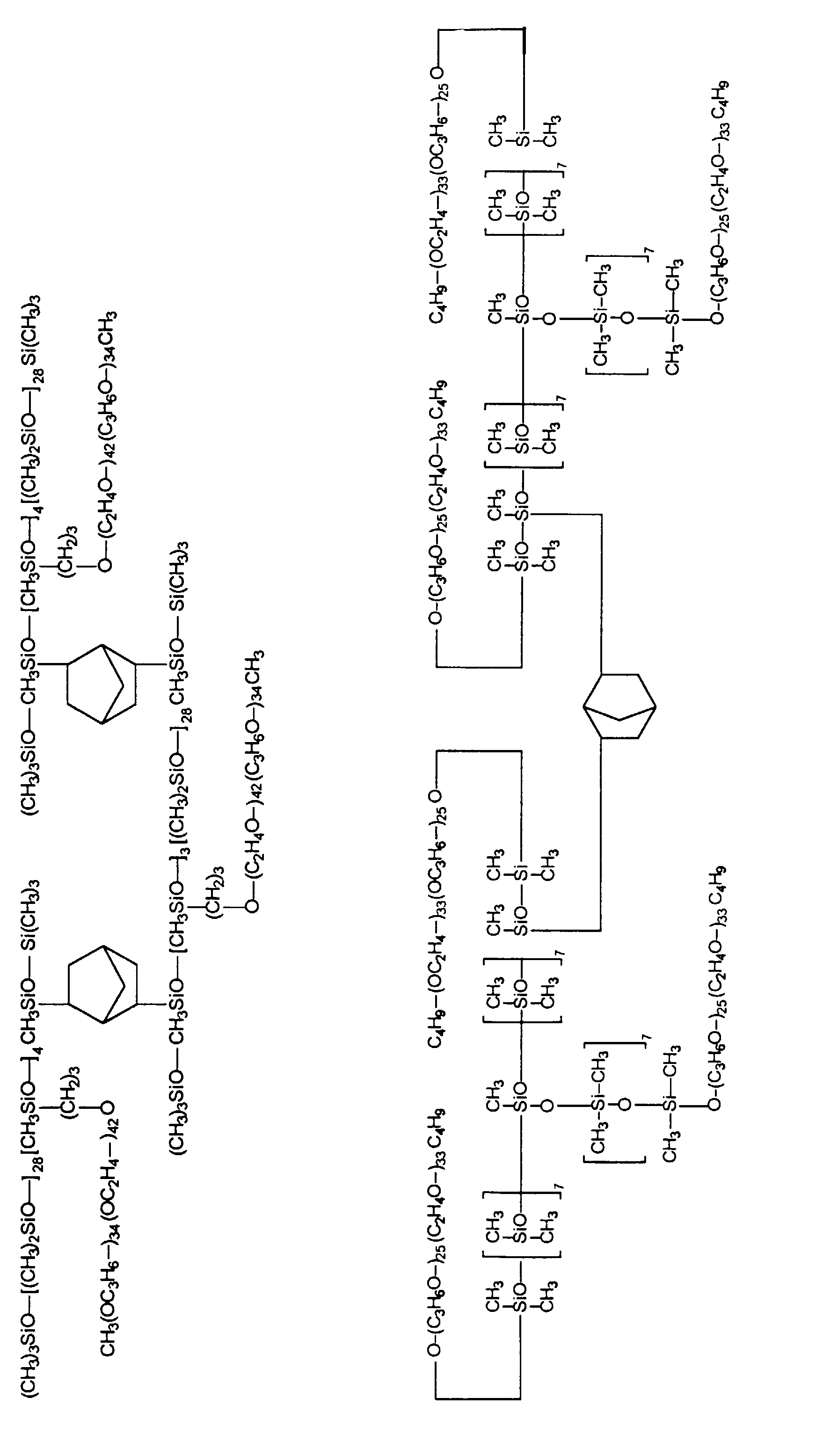

Nachfolgend wird beispielhaft die Herstellung der erfindungsgemäßen Siloxanblockcopolymeren beschrieben. Die Umsetzungen können auch in Lösemitteln durchgeführt werden, besonders dann, wenn hochviskose Produkte entstehen.

### Herstellung von Blockcopolymer 1

In einem mit Rührer, Thermometer, Gaseinleitung und Rückflußkühler versehenen Kolben werden
- 120,6 g (0,0250 Mol): Siloxan mit folgender durchschnittlicher Zusammensetzung

(CH₃)₃SiO-[(CH₃)₂SiO-]₅₈[(CH₃)HSiO-]₆Si(CH₃)₃,
- 9,3 g (0,0156 Mol): Polyether mit folgender durchschnittlicher Zusammensetzung

CH₂=CH-CH₂O-(C₂H₄O-)₁₂CH₃,
- 70,8 g (0,0469 Mol): Polyether mit folgender durchschnittlicher Zusammensetzung

CH₂=CH-CH₂O-(C₂H₄O-)₅(C₃H₆O-)₂₁CH₃,
- 377,3 g (0,0938 Mol): Polyether mit folgender durchschnittlicher Zusammensetzung

CH₂=CH-CH₂O-(C₂H₄O-)₄₅(C₃H₆O-)₃₄CH₃

und
- 1,2 g (0,0125 Mol): 2,5-Norbornadien
vorgelegt. Durch die Apparatur wird Stickstoff geleitet, und unter intensivem Rühren wird der Kolbeninhalt auf 90 °C aufgeheizt. Nun wird der Ansatz mit 0,4 g einer 10 %igen Lösung von H₂PtCl₆6H₂O in i-Propanol versetzt. Es setzt eine leicht exotherme Reaktion ein. Man läßt den Ansatz abreagieren. Nach 2,5 Std. beträgt der SiH-Umsatz 98,7 % (bestimmt über Wasserstoffabspaltung mit n-Butanol in alkalischem Medium). Man erhält ein klares, gelbes Produkt mit einer Viskosität von 3140 mPas. Das erhaltene Blockcopolymer 1 hat die folgende durchschnittliche Zusammensetzung:

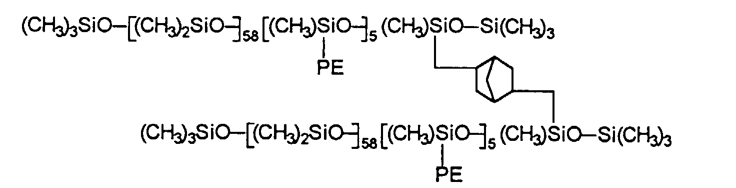

Der Rest PE ist zu 10 % der Rest -(CH₂)₃O-(C₂H₄O-)₁₂CH₃
und 30 % der Rest- (CH₂)₃O-(C₂H₄O-)₅(C₃H₆O-)₂₁CH₃
und 60 % der Rest -(CH₂)₃O-(C₂H₄O-)₄₅(C₃H₆O-)₃₄CH₃.

### Herstellung von Blockcopolymer 2

In einem mit Rührer, Thermometer, Gaseinleitung und Rückflußkühler versehenen Kolben werden
- 120,6 g (0,0250 Mol): Siloxan mit folgender durchschnittlicher Zusammensetzung

(CH₃)₃SiO-[(CH₃)₂SiO-]₅₈[(CH₃)HSiO-]₆Si(CH₃)₃,
- 21,5 g (0,0146 Mol): Polyether mit folgender durchschnittlicher Zusammensetzung

CH₂=CH-CH₂O-(C₂H₄O-)₁₆(C₃H₆O-)₁₂CH₃,
- 121,2 g (0,0803 Mol): Polyether mit folgender durchschnittlicher Zusammensetzung

CH₂=CH-CH₂O-(C₂H₄O-)₅(C₃H₆O-)₂₁CH₃,
- 58,9 g (0,0146 Mol): Polyether mit folgender durchschnittlicher Zusammensetzung

CH₂=CH-CH₂O-(C₂H₄O-)₄₅(C₃H₆O-)₃₄CH₃,
- 145,9 g (0,0364 Mol): Polyether mit folgender durchschnittlicher Zusammensetzung

CH₂=CH-CH₂O-(C₂H₄O-)₄₅(C₃H₆O-)₃₄H,
- 1,5 g (0,0166 Mol): 2,5-Norbornadien und 500 ml Toluol
vorgelegt. Durch die Apparatur wird Stickstoff geleitet, und unter Rühren wird der Kolbeninhalt auf 90 °C aufgeheizt. Nun wird der Ansatz mit 0,35 g einer 10 %igen Lösung von H₂PtCl₆6H₂O in i-Propanol versetzt. Es setzt eine leicht exotherme Reaktion ein. Man läßt den Ansatz abreagieren. Nach 4 Std. beträgt der SiH-Umsatz 99,2 % (bestimmt über Wasserstoffabspaltung mit n-Butanol in alkalischem Medium). Danach wird die Überleitung von Stickstoff beendet und der Rückflußkühler gegen einen Destillationsaufsatz ausgetauscht. Bei einer Temperatur von 80 °C und einem Vakuum von ca. 20 mbar werden flüchtige Bestandteile abdestilliert. Zurück bleibt ein klares, gelbes Produkt mit einer Viskosität von 11200 mPas. Das erhaltene Blockcopolymer 2 hat die folgende durchschnittliche Zusammensetzung:

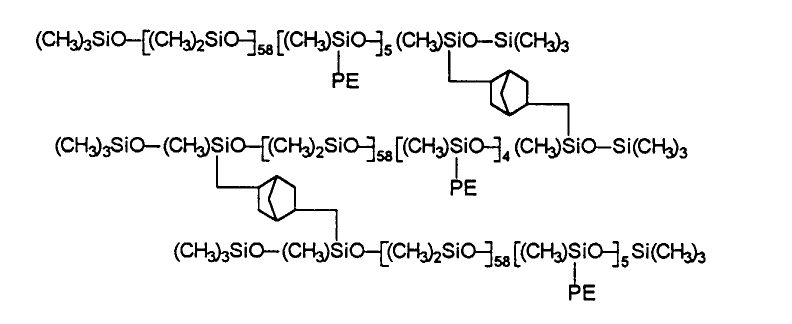

Der Rest PE ist zu 10 % der Rest -(CH₂)₃O-(C₂H₄O-)₁₆(C₃H₆O-)₁₂CH₃
und 55 % der Rest -(CH₂)₃O-(C₂H₄O-)₅(C₃H₆O-)₂₁CH₃
und 10 % der Rest -(CH₂)₃O-(C₂H₄O-)₄₅(C₃H₆O-)₃₄CH₃
und 25 % der Rest -(CH₂)₃O-(C₂H₄O-)₄₅(C₃H₆O-)₃₄H.

### Herstellung von Blockcopolymer 3

In einem mit Rührer, Thermometer, Gaseinleitung und Rückflußkühler versehenen Kolben werden
- 120,6 g (0,0250 Mol): Siloxan mit folgender durchschnittlicher Zusammensetzung

(CH₃)₃SiO-[(CH₃)₂SiO-]₅₈[(CH₃)HSiO-]₆Si(CH₃)₃,
- 21,5 g (0,0146 Mol): Polyether mit folgender durchschnittlicher Zusammensetzung

CH₂=CH-CH₂O-(C₂H₄O-)₁₆(C₃H₆O-)₁₂CH₃,
- 121,2 g (0,0803 Mol): Polyether mit folgender durchschnittlicher Zusammensetzung

CH₂=CH-CH₂O-(C₂H₄O-)₅(C₃H₆O-)₂₁CH₃,
- 58,9 g (0,0146 Mol): Polyether mit folgender durchschnittlicher Zusammensetzung

CH₂=CH-CH₂O-(C₂H₄O-)₄₅(C₃H₆O-)₃₄CH₃,
- 145,9 g (0,0364 Mol): Polyether mit folgender durchschnittlicher Zusammensetzung

CH₂=CH-CH₂O-(C₂H₄O-)₄₅(C₃H₆O-)₃₄H,
- 1, 5 g (0,0166 Mol): 2,5-Norbornadien und 313 g Solvesso 150
vorgelegt. Durch die Apparatur wird Stickstoff geleitet, und unter Rühren wird der Kolbeninhalt auf 90 °C aufgeheizt. Nun wird der Ansatz mit 0,35 g einer 10 %igen Lösung von H₂PtCl₆ 6H₂O in i-Propanol versetzt. Es setzt eine leicht exotherme Reaktion ein. Man läßt den Ansatz abreagieren. Nach 6 Std. beträgt der SiH-Umsatz 98,3 % (bestimmt über Wasserstoffabspaltung mit n-Butanol in alkalischem Medium). Man erhält eine klare, gelbe Lösung, die 60 Gew.-% des gewünschten Blockcopolymeren enthält. Die Viskosität der Lösung beträgt 870 mPas. Das erhaltene Blockcopolymer 3 hat die folgende durchschnittliche Zusammensetzung:

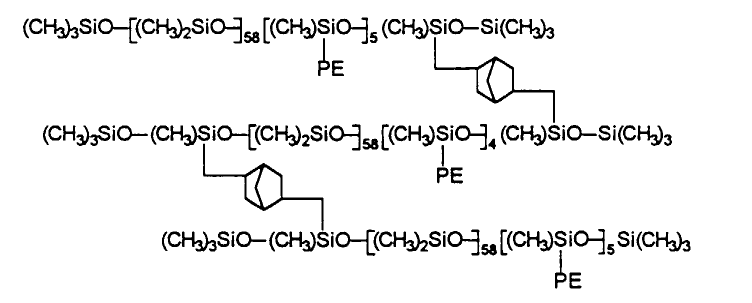

Der Rest PE ist zu 10 % der Rest -(CH₂)₃O-(C₂H₄O-)₁₆(C₃H₆O-)₁₂CH₃
und 55 % der Rest -(CH₂)₃O-(C₂H₄O-)₅(C₃H₆O-)₂₁CH₃
und 10 % der Rest-(CH₂)₃O-(C₂H₄O-)₄₅(C₃H₆O-)₃₄CH₃
und 25 % der Rest -(CH₂)₃O-(C₂H₄O-)₄₅(C₃H₆O-)₃₄H.

### Herstellung von Blockcopolymer 4

Unter den Bedingungen wie bei der Herstellung von Blockcopolymer 2 werden
- 107,7 g (0,1000 Mol): Siloxan mit folgender durchschnittlicher Zusammensetzung

(CH₃)₃SiO-[(CH₃)₂SiO-]_{9,5}[(CH₃)HSiO-]_{3,5}Si(CH₃)₃,
- 241,8 g (0,3124 Mol): Polyether mit folgender durchschnittlicher Zusammensetzung

CH₂=CH-CH₂O-(C₂H₄O-)₁₁(C₃H₆O-)₄H

und
- 4,6 g (0,0500 Mol): 2,5-Norbornadien
in Gegenwart von 350 ml Toluol und von 15 mg cis-[PtCl₂(NH₃)₂] umgesetzt. Man erhält ein gelbliches Produkt mit einer Viskosität von 870 mPas. Das erhaltene Blockcopolymer 4 hat die folgende durchschnittliche Zusammensetzung:

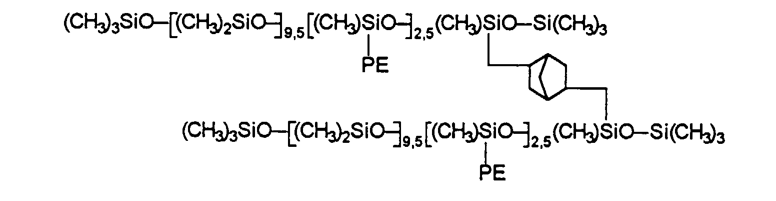

Der Rest PE ist der Rest -(CH₂)₃O-(C₂H₄O-)₁₁(C₃H₆O-)₄H.

### Herstellung von Blockcopolymer 5

### Stufe a)

In einen mit Rührer, Thermometer, Gaseinleitung und Rückflußkühler versehenen Kolben werden
- 145,5 g (0,2 Mol): Siloxan mit folgender durchschnittlicher Zusammensetzung

H(CH₃)₂SiO-[(CH₃)₂SiO-]₈Si(CH₃)₂H,
- 59,3 g (0,2 Mol): Octamethylcyclotetrasiloxan
- 109,3 g (0,2 Mol): cyclisches Siloxan der Formel

[CH₃(C₃H₆Cl)SiO-]₄

und
- 0,32 g: Trifluormethansulfonsäure (99 %ig)
eingewogen und unter Überleiten von Stickstoff 6 Std. bei 40 °C gerührt. Danach werden 6 g NaHCO₃ dem Ansatz zugefügt, und es wird eine weitere Stunde gerührt. Anschließend wird bei Raumtemperatur filtriert. Man erhält ein Siloxan mit folgender durchschnittlicher Zusammensetzung:

H(CH₃)₂SiO-[(CH₃)₂SiO-]₁₂[(CH₃)(C₃H₆Cl)SiO-]₄Si(CH₃)₂H

### Stufe b)

In einem mit Rührer, Thermometer, Gaseinleitung und Rückflußkühler versehenen Kolben werden 157,1 g (0,1 Mol) des in Stufe a) erhaltenen Siloxans und 46,1 g (0,5 Mol) 2,5-Norbornadien vorgelegt. Durch die Apparatur wird Stickstoff geleitet, und unter Rühren wird der Kolbeninhalt auf 80 °C aufgeheizt. Nun wird der Ansatz mit 18 mg Pt₂Cl₄(C₆H₁₀)₂ versetzt und 4 Std. gerührt. Danach läßt sich kein SiH-gebundener Wasserstoff mehr nachweisen. Anschließend wird das im Überschuß eingesetzte 2,5-Norbornadien im Vakuum (ca. 20 mbar) bei 60 °C abdestilliert. Man erhält 0,1 Mol Siloxan mit folgender durchschnittlicher Zusammensetzung:

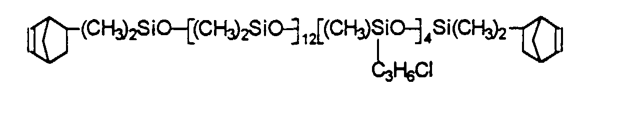

### Stufe c)

In einem weiteren mit Rührer, Thermometer, Gaseinleitung und Rückflußkühler versehenen Kolben werden
- 139,9 g (0,20 Mol): Siloxan mit folgender durchschnittlicher Zusammensetzung

(CH₃)₃SiO-[(CH₃)₂SiO-]₄[(CH₃)HSiO-]₄Si(CH₃)₃

und
- 87,2 g (0,66 Mol): 3-Allyloxy-1,2-propandiol
vorgelegt. Durch die Apparatur wird Stickstoff geleitet, und unter intensivem Rühren wird der Kolbeninhalt auf 80 °C aufgeheizt. Nun wird der Ansatz mit 2,3 g Na₂CO₃ und 20 mg Pt₂Cl₄(C₆H₁₀) ₂ versetzt. Nach 40 Min. hat der Ansatz soweit abreagiert, daß der Rest-SiH-Gehalt vom Kolbeninhalt in etwa dem entspricht, der sich einstellt, wenn pro Molekül vom eingesetzten Siloxan eine SiH-Gruppe verbleibt. Nun wird das in Stufe b) erhaltene Produkt komplett dem Ansatz zugefügt und weiter gerührt. Nach 2,5 Std. beträgt der SiH-Umsatz 97,3 % (bestimmt über Wasserstoffabspaltung mit n-Butanol in alkalischem Medium). Zum Abschluß wird der Ansatz filtriert. Man erhält eine klare, gelbe Flüssigkeit. Das erhaltene Blockcopolymer 5 hat die folgende durchschnittliche Zusammensetzung:

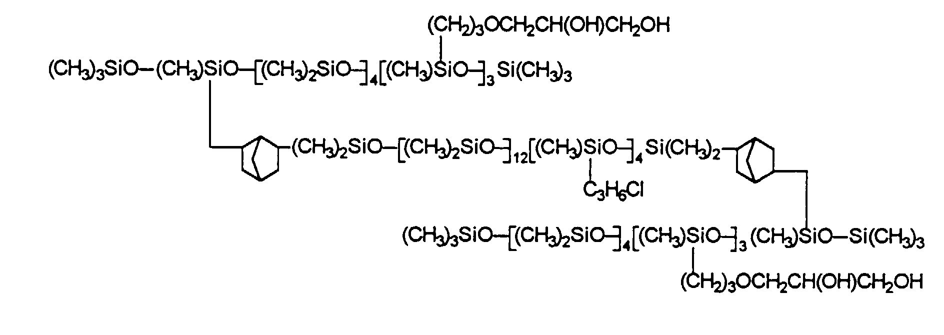

### Herstellung von Blockcopolymer 6

In einem mit Rührer, Thermometer, Gaseinleitung und Rückflußkühler versehenen Kolben werden
- 219,8 g (0,037 Mol): Siloxan mit folgender durchschnittlicher Zusammensetzung

(CH₃)₃SiO-[(CH₃)₂SiO-]₆₀[(CH₃)HSiO-]₂₂Si(CH₃)₃,
- 41,9 g (0,037 Mol): Siloxan mit folgender durchschnittlicher Zusammensetzung

(CH₃)₃SiO-[(CH₃)₂SiO-]₉[(CH₃)HSiO-]₅Si(CH₃)₃,
- 91,8 g (0,185 Mol): Polyether mit folgender durchschnittlicher Zusammensetzung

CH₂=CH-CH₂O-(C₂H₄O-)₆(C₃H₆O-)₃H,
- 3,4 g (0,037 Mol): 2,5-Norbornadien und
- 575,1 g: Laurinsäurehexylester (als Lösemittel)
vorgelegt. Durch die Apparatur wird Stickstoff geleitet, und unter Rühren wird der Kolbeninhalt auf 90 °C aufgeheizt. Nun wird der Ansatz mit 26 mg Pt₂Cl₄(C₆H₁₀)₂ versetzt. Nach 10 Min. wird die Temperatur auf 115 °C erhöht, und es werden 218,3 g (0,9725 Mol) 1-Hexadecen zugetropft. Dabei soll die Temperatur nicht über 120 °C ansteigen. Anschließend läßt man noch 9 Std. nachreagieren. Der SiH-Umsatz erreicht 97,6 %. Man erhält eine klare, gelbliche Lösung mit einer Viskosität von 59 mPas. Die Lösung enthält das Blockcopolymer 6, das folgende durchschnittliche Zusammensetzung besitzt:

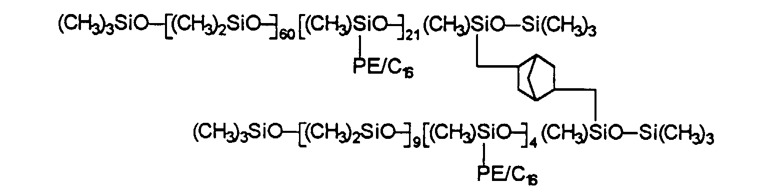

Der Rest PE/C₁₆ ist zu
16 % der Rest -(CH₂)₃O-(C₂H₄O-)₆(C₃H₆O-)₃H
und 84 % der Rest -C₁₆H₃₃.

### Herstellung von Blockcopolymer 7

In einem mit Rührer, Thermometer, Gaseinleitung und Rückflußkühler versehenen Kolben werden 57,1 g (0,50 Mol) Allylglycidylether und 4,6 g (0,05 Mol) 2,5-Norbornadien vorgelegt. Durch die Apparatur wird Stickstoff geleitet, und unter Rühren wird der Kolbeninhalt auf 90 °C aufgeheizt. Nun werden 15 mg Pt₂Cl₄(C₆H₁₀)₂ hinzugefügt und anschließend 254 g Siloxan mit folgender durchschnittlicher Zusammensetzung

(CH₃)₃SiO-[(CH₃)₂SiO-]₂₈[(CH₃)HSiO-]₅Si(CH₃)₃

in einer Stunde zugetropft. Danach läßt man noch 3,5 Std. nachreagieren und erreicht einen SiH-Umsatz von 98,5 %. Anschließend werden flüchtige Anteile bis zu einer Sumpftemperatur von 130 °C bei einem Vakuum von 15 mbar abgezogen. Man erhält eine gelbliche Flüssigkeit. In dem Produkt werden 2,03 % Epoxi-O gefunden (theor.: 2,1 %). Das erhaltene Blockcopolymer 7 hat die folgende durchschnittliche Zusammensetzung:

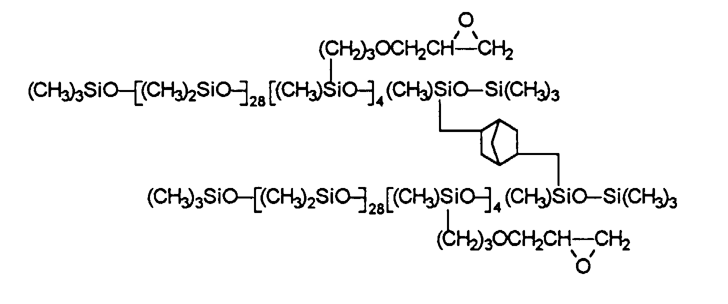

Das Copolymer 7 hat reaktive Gruppen und ist weiteren chemischen Reaktionen zugänglich, z. B. lassen sich Quats und Betaine (hierzu siehe z. B. DE-C-34 17 912) daraus herstellen. Betaine finden wiederum Verwendung in kosmetischen Zubereitungen.

Weiter sind die folgenden nichterfindungsgemäßen Blockcopolymeren V 1 bis V 6 nach bekannten, in Literatur und Patenten veröffentlichten Methoden hergestellt worden. (Sie dienen als Vergleichssubstanzen bei den anschließend beschriebenen anwendungstechnischen Untersuchungen.)

### Blockcopolymer V 1:

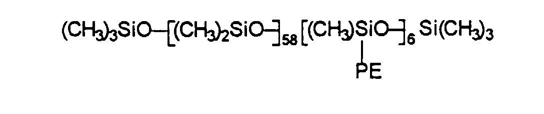

Der Rest PE ist zu 10 % der Rest-(CH₂)₃O-(C₂H₄O-)₁₂CH₃
und 30 % der Rest -(CH₂)₃O-(C₂H₄O-)₅(C₃H₆O-)₂₁CH₃
und 60 % der Rest -(CH₂)₃O-(C₂H₄O-)₄₅(C₃H₆O-)₃₄CH₃.

### Blockcopolymer V 2:

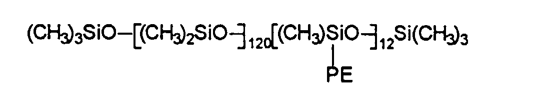

Der Rest PE ist zu 10 % der Rest -(CH₂)₃O-(C₂H₄O-)₁₂CH₃
und 30 % der Rest -(CH₂)₃O-(C₂H₄O-)₅(C₃H₆O-)₂₁CH₃
und 60 % der Rest -(CH₂)₃O-(C₂H₄O-)₄₅(C₃H₆O-)₃₄CH₃.

### Blockcopolymer V 3:

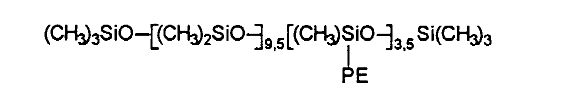

Der Rest PE ist der Rest -(CH₂)₃O-(C₂H₄O-)₁₁(C₃H₆O-)₄H.

### Blockcopolymer V 4:

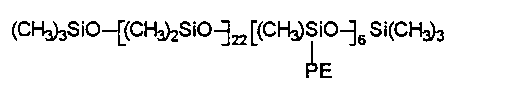

Der Rest PE ist der Rest -(CH₂)₃O-(C₂H₄O-)₁₁(C₃H₆O-)₄H.

### Blockcopolymer V 5:

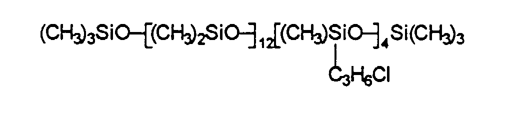

### Blockcopolymer V 6:

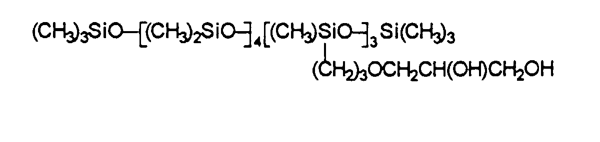

Die Blockcopolymeren 1, 2, 3, V 1 und V 2 werden als Additive in der folgenden Weichschaumformulierung getestet.

| Weichschamformulierung | |
|---|---|
| | Gew.-Teile |
| Polyol (OHZ: 46, 11 % EO) | 100 |
| Wasser | 5 |
| tert. Amin | 0,15 |
| Zinnoctoat | 0,23 |
| physik. Treibmittel | 5 |
| Stabilisator | variiert |
| Isocyanat T 80 | 63,04 |

Bei der Verschäumung werden 300 g Polyol eingesetzt. Entsprechend werden die anderen Formulierungsbestandteile umgerechnet.

Zum Austesten des Additives als Stabilisator werden Polyol, Wasser, Amin, Zinnoctoat, Stabilisator und Treibmittel unter gutem Rühren vermischt. Nach Zugabe des Isocyanats wird mit einem Glattrührer 7 Sek. bei 3000 U/Min. gerührt und das Gemisch in einen mit Papier ausgekleideten Holzkasten (Grundfläche 27 cm x 27 cm) gegossen. Zum Austesten des Additives in bezug auf andere Eigenschaften, z. B. als Zellregulator, kann natürlich auch ein anderer Stabilisator mitverwendet werden. Es entsteht ein Schaumstoff, von dem folgende Daten zur Beurteilung des eingesetzten Stabilisators gemessen werden:
1. Das Rücksacken des Schaumstoffes am Ende der Steigphase (in den nachfolgenden Tabellen mit Rückfall angegeben).
2. Die Zahl der Zellen pro Zentimeter Schaum werden unter einem Mikroskop ausgezählt.

Die bei der Verschäumung erhaltenen Ergebnisse sind in Tabelle 1 angegeben. Die Ergebnisse zeigen, daß, gegenüber den nichterfindungsgemäßen Blockcopolymeren V 1 und V 2, die neuartigen Additive 1, 2 und 3 eine sonst nicht erhältliche Kombination von geringem Rückfall und guter Feinzelligkeit bewirken, die sich auch bei Verschäumung mit unter Druck stehenden inerten Gasen bestätigt hat.

**Tabelle 1**

| Einsatz von Copolymer | Gew.-Teile | Rückfall [cm] | Zellen pro cm |
|---|---|---|---|
| 1 | 0,6 / 0,5 | 0 / 0,4 | 15 / 15 |
| V 1 | 0,6 / 0,5 | 0,5 / 0,6 | 13 / 12 |
| V 2 | 0,6 / 0,5 | 0,3 / 0,6 | 13 / 12 |
| 2 | 0,6 / 0,5 | 0,2 / 0,4 | 15 / 14 |
| 3 | 1,0 / 0,8 ¹⁾ | 0,4 / 0,7 | 16 / 16 |

| | | | |
|---|---|---|---|
| ¹⁾ Copolymer liegt 60 %ig in Solvesso vor | | | |

Die Blockcopolymeren 4, V 3 und V 4 werden als Additive in der folgenden Hartschaumformulierung getestet.

| Hartschamformulierung | |
|---|---|
| | Gew.-Teile |
| Polyol (Zucker gestartetes Polyol, OHZ: 520) | 100 |
| Wasser | 1,5 |
| tert. Amin | 2,2 |
| physik. Treibmittel | 28 |
| Stabilisator | 1,5 |
| rohes MDI (polymeres Diphenylmethan-4,4'-diisocyanat mit 31,1 % NCO) | 167 |

Bei der Verschäumung werden 100 g Polyol eingesetzt.

Die Polyurethanhartschäume werden nach üblichem Verfahren in einer Brettform mit den Maßen Länge 145 cm, Breite 14 cm, Dicke 3,5 cm hergestellt. Polyol, Wasser, Amin, Stabilisator und Treibmittel werden unter Rühren gut vermischt. Nach Zugabe des Isocyanats wird mit einem Glattrührer 6,5 Sek. bei 2500 U/Min. gerührt. Das Reaktionsgemisch wird nun in den unteren Teil der um 45° geneigten Brettform gefüllt. Um die Fließfähigkeit des Schaumes zu beurteilen, ist die Größe des Schaumansatzes so gewählt, daß die Brettform unterfüllt wird. Von dem gebildeten Hartschaumbrett werden folgende Eigenschaften zur Beurteilung des eingesetzten Stabilisators herangezogen:
1 Die Länge des Schaumbrettes als Maß für die Fließfähigkeit.
2. Oberflächenstörungen des erhaltenen Schaumbrettes (Abstufung der Beurteilung: kaum, schwach, mittel, stark, sehr stark).
3. Bodenzone des Schaumbrettes (Abstufung der Beurteilung: kaum, schwach, mittel, stark, sehr stark).
4. Innenstörungen des aufgeschnittenen Schaumbrettes (Abstufung der Beurteilung: kaum, schwach, mittel, stark, sehr stark).
5. Porenstruktur des aufgeschnittenen Schaumbrettes (Abstufung der Beurteilung: extra fein, sehr fein, fein, leicht vergröbert, vergröbert, grob).

Die bei der Verschäumung erzielten Ergebnisse sind der Tabelle 2 zu entnehmen. Auch bei der Herstellung eines Hartschaumstoffes zeigen sich die Vorteile des neuen Strukturprinzips. So erhält man bei Einsatz des erfindungsgemäßen Copolymers 4 im Gegensatz zum Einsatz der nichterfindungsgemäßen Copolymeren V 3 und V 4 eine sonst nicht erhältliche, vorteilhafte Kombination von sehr guter Fließfähigkeit und geringeren Schaumstörungen.

**Tabelle 2:**

| Einsatz von Copolymer | Fließfähigkeit [cm] | Oberflächenstörungen | Bodenzonenstörungen | Innenstörungen | Porenstruktur |
|---|---|---|---|---|---|
| 4 | 133 | mittel | mittel | mittel -stark | sehr fein - fein |
| V 3 | 131 | mittel -Stark | mittel | mittel | sehr fein - fein |
| V 4 | 133 | stark | mittel -stark | stark | sehr fein - fein |

Die Blockcopolymeren 4, 5, 7, V 5 und V 6 werden als Lackadditive getestet. Zur Prüfung der anwendungstechnischen Eigenschaften werden die modifizierten Silicone einem lufthärtenden Lacksystem in einer Menge von 1 Gew.-% beigemischt und die Mischung mit einem 40-Mikrometer-Drahtrakel auf Bonderstahlblech aufgetragen. Der Lack wird 2 Tage bei 20 °C ausgehärtet und anschließend durch einen Abzugstest mit Tesaband 4154 auf sein Releaseverhalten geprüft. Ein Maß für die Kratzfestigkeit der erhaltenen Lacke ist die Zugkraft, die nötig ist, um einen 500 g schweren Probekörper, der auf drei Schrauben ruht, mit 30 cm pro Minute über den Lack zu ziehen. Zur Prüfung der Beständigkeit der Lackeigenschaften wird dann anschließend der Lack 10 Minuten unter fließendem 20 °C warmen Wasser gespült und nach Abtrocknen des Lackes nochmals das Releaseverhalten und die Kratzfestigkeit, wie oben beschrieben, gemessen. Die Ergebnisse sind in Tabelle 3 zusammengefaßt.

**Tabelle 3**

| Lack mit 1 Gew.-% von Copolymer: | Release [N] | Kratztest [N] | Mischbarkeit | Release nach Abwaschen [N] | Kratztest nach Abwaschen [N] |
|---|---|---|---|---|---|
| Lack ohne Zusatz | 11,6 | 3,2 | | 11,7 | 3,2 |
| V 5 | 3,7 | 0,9 | schlecht | 9,8 | 3,0 |
| V 6 | 8,2 | 2,7 | gut | 8,4 | 2,7 |
| 4 | 5,1 | 1,4 | gut | 5,3 | 1,6 |
| 5 | 4,8 | 1,1 | gut | 5,0 | 1,3 |
| 7 | 4,3 | 1,2 | befriedigend | 4,3 | 1,3 |

Es zeigt sich, daß die erfindungsgemäßen Substanzen dem Lack sowohl Antikratzeigenschaften als auch abhäsive Eigenschaften vermitteln. Durch die Natur der Substituenten und das Verhältnis der Siliconkette zu der Zahl und Polarität der Substituenten läßt sich die Polarität des Additives und damit auch die Mischbarkeit mit der verwendeten Lackformulierung der jeweiligen Polarität des Lacksystemes anpassen. Dabei bieten die erfindungsgemäßen Produkte deutliche Vorteile bei dem Bestreben, sowohl auf der einen Seite abhäsive und Antikratzeigenschaften als auch gute Mischbarkeit und Dauerbeständigkeit miteinander zu vereinbaren.

Das Blockcopolymer 6 (50 gew.-%ig in Laurinsäurehexylester) wird zur Herstellung einer W/O-Emulsion eingesetzt.

In ein Glasgefäß, das mit einem Rührer versehen ist, werden folgende Bestandteile eingewogen:
2,0 g Blockcopolymer 6
0,5 g Triglycerintrioleat
8,5 g Octamethylcyclotetrasiloxan
4,0 g Isopropylmyristat und
5,0 g Vaseline DAB 8

Nach leichtem Erwärmen und unter Rühren wird eine Lösung aus 79 g Wasser und 2 g NaCl langsam zugegeben. Die erhaltene W/O-Emulsion wird gerührt, bis sie Raumtemperatur annimmt. Die erhaltene Emulsion hat eine cremeartige Konsistenz. Sie ist während einer Beobachtungszeit von zwei Monaten, bei 20 °C und 45 °C gelagert, stabil. Auch nach Abkühlung auf -25 °C und anschließendem Auftauen auf Raumtemperatur bleibt sie stabil. Die Emulsion läßt sich gut auf der Haut verteilen und besitzt ein gutes Einziehvermögen.

## Patentansprüche

1. Blockcopolymere der folgenden allgemeinen durchschnittlichen Formel 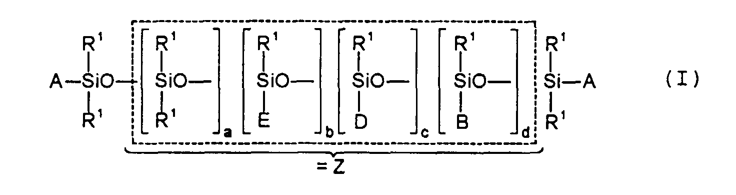 welche insgesamt bis zu 600 Si-Atome enthalten, wobei die Reste und Indices folgende Bedeutung haben:
A = Rest R¹, Rest E oder ein Rest der Formel IIa 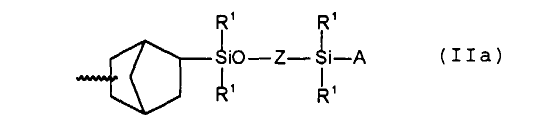 oder ein Rest der Formel IIb 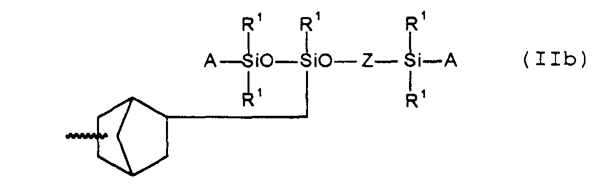
B = Rest der Formal IIa oder IIb
D = Rest der Formel 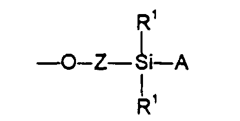
R¹ = ein Alkylrest mit 1 bis 30 Kohlenstoffatomen, ein substituierter Alkylrest, ein gegebenenfalls substituierter Arylrest oder ein gegebenenfalls substituierter Alkarylrest, wobei jedoch mindestens 80 % der Reste R¹ Methylgruppen sind,
a hat einen Wert von 3 bis 200,
b hat einen Wert von 0 bis 50,
c hat einen Wert von 0 bis 10 und
d hat einen Wert von 0 bis 5,
wobei im Fall b, c und d = 0 der Rest A nur der Rest IIb sein kann und
wobei die Werte für a, b, c und d in den einzelnen Segmenten Z der Reste A, B und D unterschiedlich sein können,
E = Rest, der
a) ein Rest der allgemeinen Formel
-R²_{f}-O-(CₘH₂ₘO-)ₙR³
ist, wobei
R² ein zweiwertiger Alkylrest, der auch verzweigt sein kann, ist und
f einen Wert von 0 oder 1,
m einen Wert von durchschnittlich 2 bis 4,
n einen Wert von 0 bis 100 hat und
R³ ein Wasserstoffrest, ein gegebenenfalls substituierter Alkylrest mit 1 bis 6 Kohlenstoffatomen, ein Acylrest oder ein -O-CO-NH-R⁴-Rest ist, bei dem R⁴ ein gegebenenfalls substituierter Alkyl- oder Arylrest ist, und/oder
b) die Bedeutung eines epoxyfunktionalisierten, gegebenenfalls Heteroatome enthaltenden Alkylsubstituenten, und/oder
c) die Bedeutung eines Mono-, Di- und Trihydroxyalkylsubstituenten, der auch aromatisch oder verzweigt und partiell oder vollständig verethert oder verestert sein kann, und/oder
d) die Bedeutung eines halogen- oder pseudohalogensubstituierten Alkyl-, Aryl- oder Aralkylrestes, der gegebenenfalls auch verzweigt sein kann, hat,
mit der Maßgabe, daß mindestens ein Rest der Formel IIa oder IIb im Molekül vorhanden ist.

2. Verwendung der Blockcopolymeren gemäß Anspruch 1 als oberflächenaktive Agentien.

3. Verwendung der Blockcopolymeren gemäß Anspruch 1 als Additive bei der Herstellung von Polyurethanschäumen.

## Claims

1. A block copolymer of the following general average formula 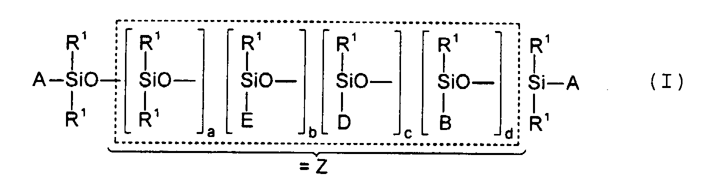 which contains a total of up to 600 Si atoms, in which the radicals and indices have the following meaning:
A = radical R¹, radical E or a radical of the formula IIa 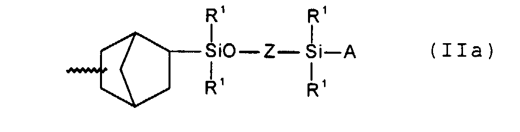 or a radical of the formula IIb 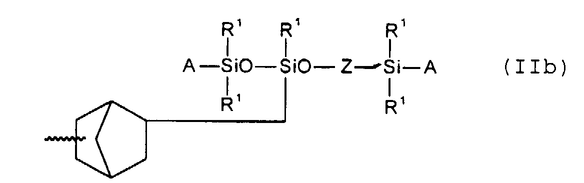
B = radical of the formula IIa or IIb
D = radical of the formula 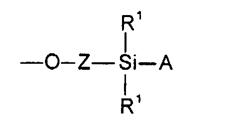
R¹ = an alkyl radical having 1 to 30 carbon atoms, a substituted alkyl radical, an optionally substituted aryl radical or an optionally substituted alkaryl radical, with at least 80% of the radicals R¹ being methyl groups,
a is from 3 to 200,
b is from 0 to 50,
c is from 0 to 10 and
d is from 0 to 5,
it being possible, in the case where b, c and d = 0, for the radical A to be only the radical IIb and it being possible for the values of a, b, c and d in the individual segments Z of the radicals A, B and D to be different,
E = radical which is
a) a radical of the general formula
-R²_{f}-O-(CₘH₂ₘO-)ₙR³
where
R² is a divalent alkyl radical, which can also be branched, and
f is 0 or 1,
m is on average 2 to 4,
n is from 0 to 100 and
R³ is a hydrogen radical, an optionally substituted alkyl radical having 1 to 6 carbon atoms, an acyl radical or a radical -O-CO-NH-R⁴ in which R⁴ is an optionally substituted alkyl or aryl radical, and/or
b) has the meaning of an epoxy-functionalized alkyl substituent which optionally contains heteroatoms, and/or
c) has the meaning of a mono-, di- and trihydroxyalkyl substituent which can also be aromatic or branched and partially or completely etherified or esterified, and/or
d) has the meaning of a halo- or pseudohalosubstituted alkyl, aryl or aralkyl radical which optionally can also be branched,
with the proviso that at least one radical of the formula IIa or IIb is present in the molecule.

2. The use of a block copolymer as claimed in claim 1 as a surface-active agent.

3. The use of a block copolymer as claimed in claim 1 as an additive in the production of polyurethane foams.

## Revendications

1. Copolymères blocs de formule moyenne générale suivante 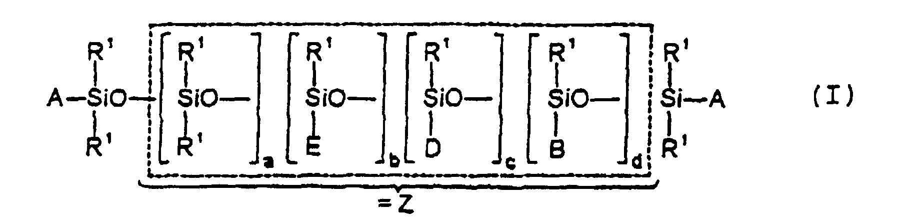 qui renferment au total jusqu'à 600 atomes de silicium, les radicaux et indices ayant la signification suivante :
A = un radical R¹, un radical E ou un radical de formule IIa 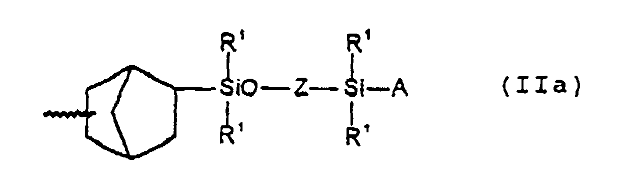 ou un radical de formule IIb 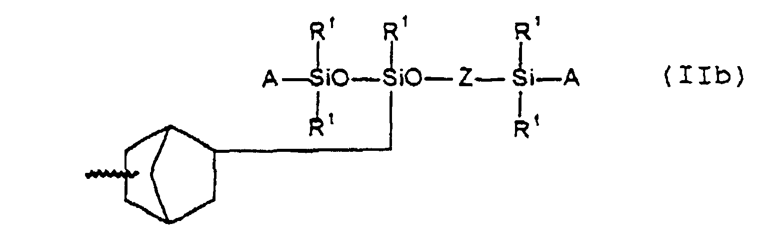
B = un radical de formule IIa ou IIb
D = un radical de formule 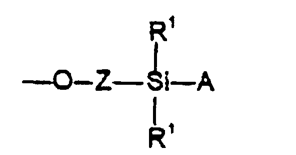
R¹ = un radical alkyle ayant de 1 à 30 atomes de carbone, un radical alkyle substitué, un radical aryle éventuellement substitué ou un radical alkaryle éventuellement substitué, au moins 80% des radicaux R¹ étant toutefois des groupes méthyle,
a vaut de 3 à 200,
b vaut de 0 à 50,
c vaut de 0 à 10 et
d vaut de 0 à 5,
le radical A pouvant uniquement être le radical IIb dans le cas où b, c et d = 0, et
les valeurs de a, b, c et d dans les segments individuels Z des radicaux A, B et D pouvant être différentes,
E = un radical qui représente
a) un radical de formule générale
-R²_{f}-O-(CₘH₂ₘO-)ₙR³
dans laquelle
R² représente un radical alkyle bivalent qui peut également être ramifié, et
f vaut 0 ou 1,
m vaut en moyenne de 2 à 4,
n vaut de 0 à 100, et
R³ représente un radical hydrogène, un radical alkyle éventuellement substitué ayant de 1 à 6 atomes de carbone, un radical acyle ou un radical -O-CO-NH-R⁴, dans lequel R⁴ représente un radical alkyle ou aryle éventuellement substitué, et/ou
b) un substituant alkyle à fonction époxy renfermant éventuellement des hétéroatomes, et/ou
c) un substituant mono-, di- ou trihydroxyalkyle qui peut également être aromatique ou ramifié et partiellement ou totalement éthérifié ou estérifié, et/ou
d) un radical alkyle, aryle ou aralkyle halogéno-ou pseudohalogéno-substitué, qui peut être également éventuellement ramifié,
à condition qu'au moins un radical de formule IIa ou IIb soit présent dans la molécule.

2. Utilisation des copolymères blocs selon la revendication 1 en tant qu'agents tensioactifs.

3. Utilisation des copolymères blocs selon la revendication 1 en tant qu'additifs lors de la préparation de mousses de polyuréthanes.
